(19) Europäisches Patentamt

European Patent Office

Office européen des brevets

(11) **EP 4 787 538 A2**

(12) **EUROPEAN PATENT APPLICATION**

(43) Date of publication:
 **05.08.2026 Bulletin 2026/32**

(21) Application number: **26174545.9**

(22) Date of filing: **24.04.2026**

(51) International Patent Classification (IPC):
 *H01M 10/48* (2006.01)    *H01M 10/613* (2014.01)
 *H01M 10/6563* (2014.01)

(52) Cooperative Patent Classification (CPC):
 **H01M 10/486; H01M 10/613; H01M 10/6563;**
 **Y02E 60/10**

(84) Designated Contracting States:
 **AL AT BE BG CH CY CZ DE DK EE ES FI FR GB**
 **GR HR HU IE IS IT LI LT LU LV MC ME MK MT NL**
 **NO PL PT RO RS SE SI SK SM TR**
 Designated Extension States:
 **BA**
 Designated Validation States:
 **GE KH LA MA MD TN**

(30) Priority:  **25.04.2025  CN 202510529535**

(71) Applicant: **Xiamen Ampack Technology Limited**
 **Xiamen City, Fujian Province, 361000 (CN)**

(72) Inventors:
 • **XIE, Yunfeng**
  **Xiamen City, Fujian Province 361000 (CN)**
 • **LI, Tingyong**
  **Xiamen City, Fujian Province 361000 (CN)**
 • **LI, Yi**
  **Xiamen City, Fujian Province 361000 (CN)**

(74) Representative: **Kraus & Lederer PartGmbB**
 **Thomas-Wimmer-Ring 15**
 **80539 München (DE)**

(54) **THERMAL MANAGEMENT METHOD FOR ENERGY STORAGE DEVICE, ENERGY STORAGE DEVICE, AND STORAGE MEDIUM**

(57)    An energy storage device comprises: multiple battery modules, each of the battery modules comprises a fan and multiple cells; multiple temperature sensors, comprising a first temperature sensor and a second temperature sensor, wherein the first temperature sensor is configured to monitor a temperature of the cells, and the second temperature sensor is configured to monitor an ambient temperature outside the energy storage device; and a heat exchanger, comprising a first air blower, a heat exchange unit, and a second air blower, wherein the heat exchanger is configured to perform heat exchange between a fluid inside the energy storage device and a fluid outside the energy storage device.

S201

In response to a cooling activation condition being triggered, control a first air blower, a second air blower, and a fan of an energy storage device to operate, and control a first air volume to be substantially the same as a total fan air volume

FIG. 5

EP 4 787 538 A2

## Description

## TECHNICAL FIELD

The present application relates to the field of energy storage technology, and particularly relates to a thermal management method for an energy storage device, an energy storage device, and a storage medium.

## BACKGROUND

During charging and discharging processes of cells in an energy storage device, a large amount of heat is generated, causing the cell temperature of the cells to rise. An excessively high cell temperature shortens the service life of the cells, and even causes fire or explosion. Therefore, it is necessary to dissipate heat from the cells of the energy storage device to reduce the cell temperature of the cells.

## SUMMARY

The present application provides a thermal management method for an energy storage device, an energy storage device, and a storage medium, aiming to perform heat dissipation management on the energy storage device.

According to a first aspect, a thermal management method for an energy storage device is provided. The thermal management method for an energy storage device is applied to an energy storage device. The energy storage device includes: multiple battery modules, where each of the battery modules includes a fan and multiple cells; multiple temperature sensors, including a first temperature sensor and a second temperature sensor, where the first temperature sensor is configured to monitor a temperature of the cells, and the second temperature sensor is configured to monitor an ambient temperature outside the energy storage device; and a heat exchanger, including a first air blower, a heat exchange unit, and a second air blower, where the heat exchanger is configured to perform heat exchange between a fluid inside the energy storage device and a fluid outside the energy storage device. The method includes: in response to a cooling activation condition being triggered, controlling the first air blower, the second air blower, and the fans to operate, and controlling a first air volume to be substantially the same as a total fan air volume; where the cooling activation condition includes: a highest temperature of the cells is greater than or equal to a first temperature threshold, and a first temperature difference value is greater than or equal to a first temperature difference threshold. The first temperature difference value is defined as a difference between the highest temperature of the cells and the ambient temperature; and the first air volume is defined as an air volume generated by operation of the first air blower. The total fan air volume is defined as a sum of all air volumes generated by operation of the fans.

In this technical solution, the highest temperature of the cells is greater than or equal to the first temperature threshold, and the difference between the highest temperature of the cells and the ambient temperature outside the energy storage device is greater than the first temperature difference threshold, indicating that the cell temperature is high and cooling and heat dissipation is needed for the cells. The temperature difference between the inside and outside of the energy storage device is large, satisfying a cooling activation condition. Controlling the first air blower in the heat exchanger, the second air blower, and the fans to operate helps to accelerate heat dissipation of the energy storage device, reduce the cell temperature inside the energy storage device, and extend the service life of the cells. The air volume generated by operation of the first air blower is substantially the same as the total air volume generated by operation of the fans, preventing reduction of heat dissipation efficiency caused by backflow of hot air from the tail of the battery module to the head of the battery module or caused by redundant air volume of the first air blower.

## BRIEF DESCRIPTION OF DRAWINGS

FIG. 1 is a schematic diagram of an appearance of an energy storage device according to an embodiment of the present application;
FIG. 2 and FIG. 3 are schematic cross-sectional views of an energy storage device according to an embodiment of the present application;
FIG. 4 is a schematic modular diagram of an energy storage device according to an embodiment of the present application;
FIG. 5 is a schematic flowchart of a thermal management method for some energy storage devices according to an embodiment of the present application;
FIG. 6 is a schematic flowchart of a thermal management method for some other energy storage devices according to an embodiment of the present application;
FIG. 7 is a schematic flowchart of a thermal management method for still some other energy storage devices according to an embodiment of the present application; and
FIG. 8 is a schematic structural diagram of an energy storage device according to an embodiment of the present application.

## DETAILED DESCRIPTION

In some embodiments of the present application, words such as "first" and "second" are only used to distinguish different objects and should not be understood as indicating or implying relative importance, nor indicating or implying an order. For example, a first application, a second application, and the like are used to distinguish different applications, rather than to describe a specific order of the applications. Features defined with "first" and "second" may explicitly or implicitly include one or more of the features.

The technical solutions of the present application are applicable to energy storage devices, such as household energy storage devices, industrial and commercial energy storage devices, UPS (Uninterruptible Power Supply), and the like. The present application proposes three control strategies: a heat dissipation control strategy, a temperature equalization control strategy, and a heating control strategy, facilitating thermal management of the energy storage device under different operating conditions.

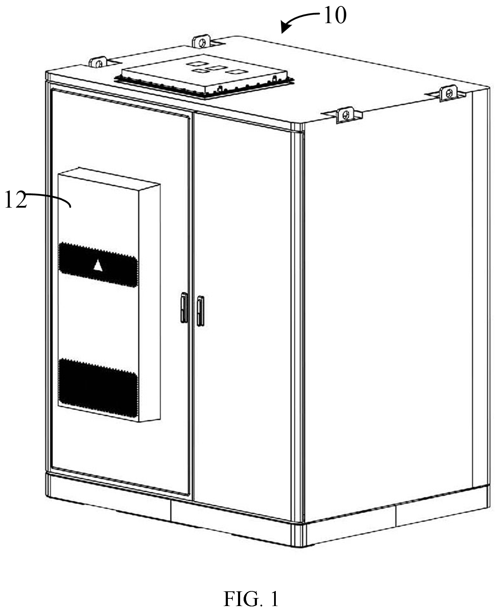

For ease of understanding, the energy storage device of the present application is first introduced. Reference is made to FIG. 1 to FIG. 4.

As shown in FIG. 1 to FIG. 4, the energy storage device 10 includes multiple battery modules 11, and the multiple battery modules 11 are stacked along a height direction of the energy storage device 10. Each battery module 11 includes a fan 111 and multiple cells 112. In some embodiments, there is one or more fans 111 in each battery module 11. It is understandable that the number of the battery modules 11 or the number of the cells in each battery module 11 is defined by product requirements, and an electrical connection manner of the cells in the battery module 11 includes series connection, parallel connection, or series-parallel connection (including series connection and parallel connection). In some implementations, the cells are lithium-ion cells, nickel-metal hydride cells, nickel-cadmium cells, perovskite cells, lead-acid cells, solid-state cells, or the like.

As shown in FIG. 1 to FIG. 4, the energy storage device 10 includes a heat exchanger 12, where the heat exchanger 12 is configured to perform heat exchange between a fluid inside the energy storage device 10 and a fluid outside the energy storage device 10. The energy storage device 10 uses the heat exchanger 12 to transfer heat inside the energy storage device 10 to the external environment of the energy storage device 10, reducing the temperature inside the energy storage device 10 to cool the battery module 11.

The heat exchanger 12 includes a first air blower 121, a heat exchange unit 122, and a second air blower 123. The fluid inside the energy storage device exchanges heat with the fluid outside the energy storage device through the heat exchange unit 122, thereby transferring heat generated by the battery module 11 from the inside of the energy storage device 10 to the external environment of the energy storage device 10. In the following description, the first air blower 121 is also referred to as an internal air blower, and the second air blower 123 is also referred to as an external air blower.

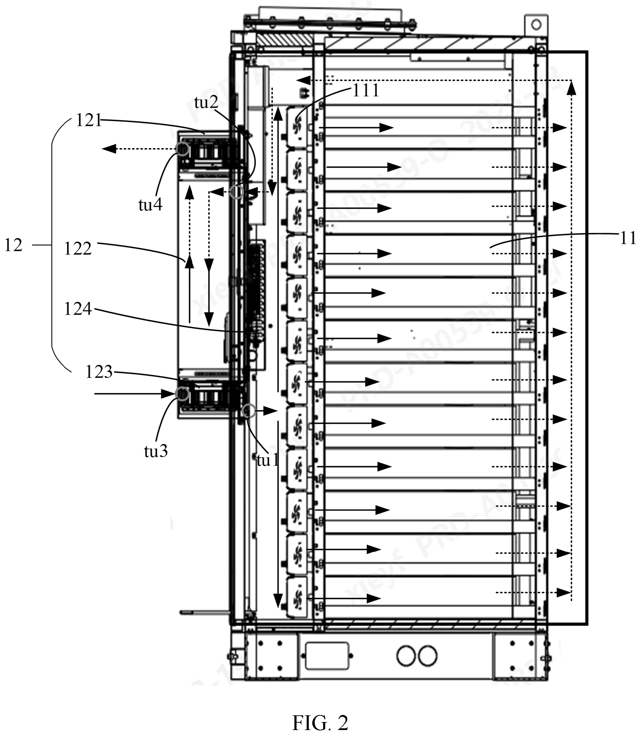

As shown in FIG. 2, the heat exchanger 12 includes an air supply port tu1 and an air return port tu2. The first air blower 121 is configured to drive the fluid inside the energy storage device 10 to flow, making the fluid circulate inside the energy storage device. When the first air blower 121 operates, the first air blower 121 drives the fluid inside the energy storage device 10 to flow. After undergoing heat exchange in the heat exchange unit 122, the fluid is blown out of the air supply port tu1. The fluid flows to the battery module 11 through an air supply duct and the fan 111. The fluid passes through the battery module 11 and exchanges heat with the battery module 11, dissipating heat for the battery module 11 and reducing the temperature of the battery module 11. After passing through the battery module 11, the fluid enters the heat exchange unit 122 through the air return port tu2 to exchange heat with an external fluid. It is understandable that the first air blower 121 is an internal circulation air blower, the air supply port tu1 is an internal circulation air supply port, and the air return port tu2 is an internal circulation air return port.

As shown in FIG. 2, the heat exchanger 12 includes an air inlet tu3 and an air outlet tu4. The second air blower 123 is configured to drive the fluid outside the energy storage device 10 to flow into the heat exchanger 12. When the second air blower 123 operates, the second air blower 123 drives an external fluid to enter the heat exchange unit 122 from the air inlet tu3, exchanges heat with the fluid inside the energy storage device 10, and then flows out of the air outlet tu4, thereby taking away heat inside the energy storage device 10. It is understandable that the second air blower 123 is an external circulation air blower, the air inlet tu3 is an external circulation air inlet, and the air outlet tu4 is an external circulation air outlet.

In some embodiments, the heat exchanger 12 further includes a heater 124, and the heater 124 is provided inside the energy storage device 10 and is configured to heat the cells. In some specific designs, the heater 124 is a PTC heater.

In some embodiments, the energy storage device 10 includes multiple temperature sensors 13. The multiple temperature sensors 13 include a first temperature sensor 131 and a second temperature sensor 132, where the first temperature sensor 131 is configured to monitor a temperature of the cells, and the second temperature sensor 132 is configured to monitor an ambient temperature outside the energy storage device 10. It is understandable that there are multiple first temperature sensors 131, and there is one or more second temperature sensors 132.

The heat dissipation control strategy, temperature equalization control strategy, and heating control strategy of the present application are implemented in the energy storage device. The heat dissipation control strategy, temperature equalization control strategy, and heating control strategy of the present application are specifically introduced below.

I. Heat dissipation control strategy

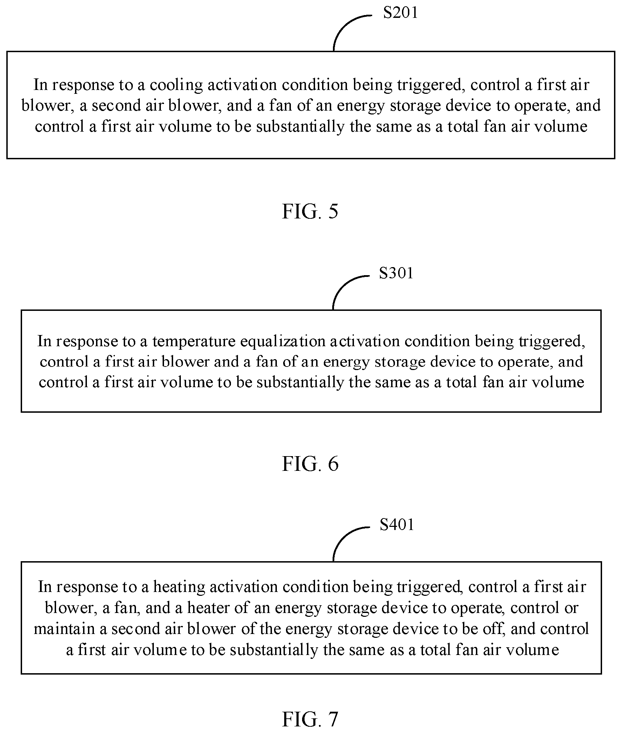

Referring to FIG. 5, FIG. 5 is a schematic flowchart of a thermal management method for some energy storage devices according to an embodiment of the present application. For the introduction related to the energy storage device, reference is made to the relevant descriptions of the foregoing FIG. 1 to FIG. 4. As shown in FIG. 5, the method includes the following step.

S201: In response to a cooling activation condition being triggered, control a first air blower, a second air blower, and a fan of the energy storage device to operate, and control a first air volume to be substantially the same as a total fan air volume.

In some embodiments, the cooling activation condition is set as: a highest temperature of cells is greater than or equal to a first temperature threshold, and a first temperature difference value is greater than or equal to a first temperature difference threshold. The first temperature difference value is a difference between the highest temperature of the cells and an ambient temperature outside the energy storage device.

The highest temperature of the cells refers to a maximum value among temperatures monitored by all first temperature sensors in the energy storage device. An example in which the energy storage device includes 12 battery modules, each battery module includes 24 cells and 12 first temperature sensors, and the 12 first temperature sensors are distributed at different positions in the battery module is used. By acquiring data or electrical signals transmitted from the first temperature sensors, 12*12=144 cell temperatures are calculated, and the 144 cell temperatures form a first cell temperature set $Tc=\{Tc_1, Tc_2, Tc_3, ..., and\ Tc_{144}\}$. The highest temperature of the cells is a maximum value in the first cell temperature set, that is, a maximum temperature of the cells is $\max\{Tc_1, Tc_2, Tc_3, ..., and\ Tc_{144}\}$.

The highest temperature of the cells is represented as $Tc_{max}$, and $Tc_{max}=\max\{Tc_1, Tc_2, Tc_3, ..., and\ Tc_N\}$, where N represents the number of the first temperature sensors in the energy storage device.

The first temperature difference value is represented as $\Delta T1$, and $\Delta T1=Tc_{max}-Te$, where Te represents the ambient temperature outside the energy storage device. The ambient temperature outside the energy storage device is a temperature calculated by acquiring data or electrical signals transmitted from the second temperature sensor. When there are multiple second temperature sensors, data or electrical signals transmitted from the multiple second temperature sensors are acquired, multiple temperature values are calculated, and then a characteristic value is calculated based on the multiple temperature values as the ambient temperature outside the energy storage device. For example, an average value of the multiple temperature values is used as the ambient temperature outside the energy storage device.

The first air volume is defined as an air volume generated by operation of the first air blower, and the first air volume is represented as Iav. The total fan air volume is defined as a sum of all air volumes generated by operation of the fans, the total fan air volume is represented as Fat, and $Fat = \sum_{i=1}^{i=M} Fav_i$, where $Fav_i$ represents an air volume generated by operation of the i-th fan, and M represents the number of fans in an operating state.

In some embodiments, the first air volume is substantially the same as the total fan air volume, which includes the following two situations: (1) the first air volume is the same as the total fan air volume, that is, Iav=Fat; and (2) a ratio of the first air volume to the total fan air volume is within a first ratio range. For example, the first ratio range is [95%, 105%], that is, 95%≤Iav/Fat≤105%.

The first air blower and the fans operate after receiving a control signal, and the control signal has a duty ratio. By controlling the duty ratio of the first air blower and the duty ratio of the fans, the first air volume and the air volume of the fans are obtained. To make the first air volume and the total fan air volume substantially the same, an air volume test is first performed on the first air blower and the fans to determine air volumes generated by operation of the first air blower at different duty ratios and to determine air volumes generated by operation of the fans at different duty ratios. Based on the air volumes generated by operation of the first air blower at different duty ratios and the air volumes generated by operation of the fan at different duty ratios, the duty ratio of the first air blower and the duty ratios of the fans that satisfy the condition that the first air volume and the total fan air volume are substantially the same are determined (which are hereinafter referred to as the duty ratio of the first air blower and the duty ratios of the fans that satisfy the first condition, that is, the first condition characterizes that the first air volume and the total fan air volume are substantially the same), and the duty ratio of the first air blower and the duty ratios of the fans that satisfy the first condition are stored in the energy storage device. In some embodiments, the specifications of the fans are different from that of the first air blower, and under the control of the same duty ratio, their respective exhaust volumes are different. Therefore, the duty ratio for controlling the operation of the first air blower and satisfying the first condition is different from the duty ratio for controlling the operation of the fan and satisfying the first condition.

In some embodiments, there are multiple groups of duty ratios of the first air blower and duty ratios of the fans that satisfy the first condition, so as to adapt to the duty ratio requirements of the energy storage device under different operating conditions. When the cooling activation condition is triggered or satisfied, the energy storage device selects the duty ratio of the first air blower and the duty ratios of the fans that adapt to the heat dissipation control strategy and satisfy the first condition, to drive the first air blower and each fan to operate, so as to control the first air volume to be substantially the same as the total fan air volume. In a specific example, there are multiple groups of duty ratios of the first air blower and duty ratios of the fans that satisfy the first condition, and each group includes one duty ratio of the first air blower and duty ratios of M fans, where M represents the number of the fans. It is understandable that the M fans have the same or different duty ratios, and the duty ratios of the fans are different from the duty ratio of the first air blower.

The duty ratio refers to a proportion of a time for a control signal (referring to an electrical signal for controlling the air blower or the fans) to keep the device in an on state within a period of time. Specifically, the duty ratio is defined as a ratio of a time length within which a pulse width modulation (pulse-width modulation, PWM) signal is in high level to a time length of an entire cycle of the pulse width modulation (pulse-width modulation, PWM) signal. The duty ratio is usually expressed in percentage. Assuming that one cycle is represented as T and a time within which the signal is in high level in one cycle is represented as t, the duty ratio is represented as D, and D=(t/T)*100%. For example, if the cycle of a PWM signal is 10 milliseconds and the time within which the signal is in high level in one cycle is 5 milliseconds, the duty ratio D= (5/10)*100%=50%.

The first temperature threshold and the first temperature difference threshold are thresholds used to determine whether the cooling activation condition is satisfied. For example, the first temperature difference threshold is set to 5°C. The present application does not impose any specific limitation on the first temperature difference threshold.

In a specific control interaction process, a processor in the energy storage device (a processor configured to issue a control instruction, for example, a processor in a battery management system, or a processor independent of a battery management system) acquires data from a second temperature sensor to determine the ambient temperature outside the energy storage device, acquires data from a first temperature sensor to determine the highest temperature of the cells, calculates a difference between the highest temperature of the cells and the ambient temperature outside the energy storage device as a first temperature difference value, determines whether the first temperature difference value is greater than or equal to the first temperature difference threshold, and determines whether the highest temperature of the cells is greater than or equal to the first temperature threshold, to determine whether the cooling activation condition is satisfied. If the above two conditions are both satisfied, it indicates that the cooling activation condition is satisfied, and the processor sends start instructions to the first air blower, the second air blower, and the fans of the battery modules to control the first air blower, the second air blower, and the fans of the energy storage device to operate, and outputs corresponding PWM signals to the first air blower and the fans according to an adapted heat dissipation control strategy and the duty ratio of the first air blower and the duty ratios of the fans that satisfy the first condition, so as to control the first air volume to be substantially the same as the total fan air volume.

In some embodiments, the ambient temperature is divided into multiple temperature ranges, and different temperature ranges correspond to different first temperature thresholds. To be specific, when the ambient temperature is within different temperature ranges, the first temperature threshold is different. In this way, a cell temperature threshold is appropriately set to avoid a failure in achieving a heat dissipation effect when heat dissipation is activated upon an inappropriate temperature difference between the inside and outside of the energy storage device.

In a specific implementation, the multiple temperature ranges include a first temperature range, a second temperature range, and a third temperature range. A temperature of the first temperature range is higher than a temperature of the second temperature range, and the temperature of the second temperature range is higher than a temperature of the third temperature range. The first temperature threshold includes a first value corresponding to the first temperature range, a second value corresponding to the second temperature range, and a third value corresponding to the third temperature range. The first value is greater than the second value, and the third value is greater than the second value.

The first temperature range is used to represent a temperature range where the ambient temperature is high, and is understood as a high temperature range; the second temperature range is used to represent a temperature range where the ambient temperature is moderate, and is understood as a medium temperature range; and the third temperature range is used to represent a temperature range where the ambient temperature is low, and is understood as a low temperature range. In the high temperature range, since the ambient temperature is high, activating heat dissipation when the cell temperature is low cannot achieve the heat dissipation effect, and on the contrary, it will increase the energy consumption of the energy storage device. Therefore, the first temperature threshold for triggering heat dissipation is set to the first value, and the first value is greater than the second value, increasing the temperature threshold for triggering heat dissipation control to ensure that the heat dissipation control truly plays a role in dissipating heat from the cells. In the low temperature range, since the ambient temperature is low, the external heat dissipation conditions are good, and at this time, the temperature of the cells needs to be maintained. If the third value is set to be less than the second value, the temperature of the cells may decrease significantly, forming low-temperature cells, thereby affecting the charging and discharging of the cells. In addition, in the next use of the cells, the cells may need to be heated, increasing the energy consumption of the energy storage device.

Exemplarily, the first temperature range is, for example, [35°C, +∞), and the first value corresponding to the first temperature range is, for example, 40°C; the second temperature range is, for example, [10°C, 35°C), and the first value corresponding to the second temperature range is, for example, 35°C; and the third temperature range is, for example, (-∞, 10°C), and the second value corresponding to the third temperature range is, for example, 40°C. It is understandable that the temperature ranges and first temperature thresholds are used as a specific example, and the present application does not impose any specific limitation on the specific division of the temperature ranges and the first temperature thresholds corresponding to the temperature ranges.

In a specific control interaction process, in the process of determining whether the cooling activation condition is satisfied, the processor in the energy storage device first determines the ambient temperature outside the energy storage device, takes a temperature range where the ambient temperature outside the energy storage device is located as a current temperature range to determine a temperature threshold corresponding to the current temperature range as the first temperature threshold, and then determines whether the highest temperature of the cells is greater than or equal to the first temperature threshold, to determine whether the cooling activation condition is satisfied.

In some embodiments, the energy storage device determines the first temperature threshold corresponding to the current temperature range according to a preset time interval. The preset time interval is a preset time interval required to adjust a rotating speed of the air blower and/or a rotating speed of the fans, for example, the preset time interval is 30 minutes. The present application does not impose any specific limitation on the preset time interval.

In a specific control interaction process, the processor determines whether a time from the last adjustment to a current time reaches the preset time interval. If the time reaches the preset time interval, a temperature range corresponding to a current external ambient temperature (that is, a current temperature range) is determined, and a temperature threshold corresponding to the current temperature range is used as the latest first temperature threshold. The latest first temperature threshold is used to determine whether the cooling activation condition is satisfied. If the time does not reach the preset time interval, the first temperature threshold determined last time is still used, and the first temperature threshold determined last time is used to determine whether the cooling activation condition is satisfied.

Determining the temperature threshold according to the preset time interval avoids an excessively quick change in an adjustment strategy and prevents frequent rotating speed adjustment of the air blower and/or the fans.

In some embodiments, the thermal management method under the heat dissipation control strategy further includes: in response to the ambient temperature being within different temperature ranges, controlling a first duty ratio to be positively correlated with at least some of the temperature ranges. When the cooling activation condition is triggered, a cycle of an electrical signal for controlling the first air blower is defined as a first cycle, an operation control duration for the first air blower in the first cycle is defined as a first duration, and the first duty ratio is defined as a ratio of the first duration to the first cycle.

In some embodiments of the present application, when the cooling activation condition is triggered, the electrical signal for controlling the first air blower is a first PWM signal, the first cycle represents a cycle of the first PWM signal, the first duty ratio is represented as D1, and D1=(t1/T1)*100%, where t1 represents the operation control duration for the first air blower in the first cycle (that is, a duration within which the first PWM signal is in high level), T1 represents the first cycle, and (T1-t1) represents a stop control duration for the first air blower in the first cycle (that is, a duration within which the first PWM signal is in low level).

The first duty ratio being positively correlated with at least some of the temperature ranges means: each temperature range corresponds to one duty ratio range, and in the multiple temperature ranges, at least two temperature ranges satisfy that a lower limit value of a duty ratio range of the high temperature range is greater than a lower limit value of a duty ratio range of the low temperature range. The lower limit value of the duty ratio range refers to a minimum value in the duty ratio range.

Exemplarily, the multiple temperature ranges include the foregoing first temperature range, second temperature range, and third temperature range. The first temperature range is, for example, [35°C, +∞); the second temperature range is, for example, [10°C, 35°C); and the third temperature range is, for example, (-∞, 10°C). A duty ratio range corresponding to the first temperature range is, for example, [60%, 90%]; a duty ratio range corresponding to the second temperature range is, for example, [50%, 90%]; and a duty ratio range corresponding to the third temperature range is, for example, [60%, 90%]. For the first temperature range and the second temperature range, the first temperature range is a high temperature range, the second temperature range is a low temperature range, and the lower limit value of the duty ratio range corresponding to the first temperature range is greater than the lower limit value of the duty ratio range corresponding to the second temperature range.

On the premise of controlling the first air volume to be substantially the same as the total fan air volume, the energy storage device controls the first duty ratio to be positively correlated with at least some of the temperature ranges. In a specific control interaction process, in the process of selecting the duty ratio of the first air blower and the duty ratios of the fans that adapt to the heat dissipation control strategy and satisfy the first condition, the processor determines a duty ratio range corresponding to the current temperature range as an duty ratio adjustment range, and selects the duty ratio of the first air blower that satisfies the first condition within the duty ratio adjustment range as the first duty ratio, so as to control the first duty ratio to be positively correlated with at least some of the temperature ranges.

The duty ratio of the internal air blower is controlled to be positively correlated with at least some of the temperature ranges, so that the heat dissipation conditions are good when the ambient temperature is not high. Controlling the internal air blower to operate at a low rotating speed achieves a good heat dissipation effect on one hand, and helps to reduce the energy consumption on the other hand.

In some embodiments, the thermal management method of the present application further includes: in response to the cooling activation condition being triggered, controlling the first duty ratio to be positively correlated with the highest temperature of the cells. For the definition of the first duty ratio, reference is made to the foregoing description.

The first duty ratio being positively correlated with the highest temperature of the cells means that a higher highest temperature of the cells indicates a larger first duty ratio and a higher rotating speed of the first air blower, and a lower highest temperature of the cell indicates a smaller first duty ratio and a lower rotating speed of the first air blower.

In some implementations, the first duty ratio and the highest temperature of the cells have a linear mapping relationship, that is, $D1=k1*Tc_{max}$, where $k1$ represents a linear constant between the highest temperature of the cells and the first duty ratio, and $k1>0$. In some other implementations, the first duty ratio being positively correlated with the highest temperature of the cells is further set as: the first duty ratio and the highest temperature of the cells have a monotonically increasing relationship, a linear increasing relationship, or a stepwise increasing relationship.

On the premise of controlling the first air volume to be substantially the same as the total fan air volume, the energy storage device controls the first duty ratio to be positively correlated with the highest temperature of the cells. In a specific control interaction process, in the process of selecting the duty ratio of the first air blower and the duty ratios of the fans that adapt to the heat dissipation control strategy and satisfy the first condition, the processor controls the highest temperature of the cells to be positively correlated with the first duty ratio within the duty ratio adjustment range.

Controlling the duty ratio of the internal air blower to be positively correlated with the highest temperature of the cells helps to quickly reduce the temperature of the cells and achieve the effect of quick heat dissipation.

In some embodiments, the thermal management method of the present application further includes: controlling the first air volume and a second air volume to be substantially the same.

The second air volume is defined as an air volume generated by operation of the second air blower, and the second air volume is represented as Oav. The first air volume is substantially the same as the second air volume, which includes the following two situations: (1) the first air volume is the same as the second air volume, that is, Iav=Oav; and (2) a ratio of the first air volume to the second air volume is within a second range. For example, the second range is, for example, [90%, 110%], that is, $90\% \leq Iav/Oav \leq 110\%$.

The first air volume and the second air volume are obtained by controlling the duty ratio of the first air blower and the duty ratio of the second air blower. To make the first air volume and the second air volume substantially the same, an air volume test is first performed on the first air blower and the second air blower to determine air volumes generated by operation of the first air blower and operation of the second air blower at different duty ratios. Based on the air volumes generated by operation of the first air blower at different duty ratios, the duty ratio of the first air blower and the duty ratio of the second air blower that satisfy the condition that the first air volume and the second air volume are substantially the same are determined (which are hereinafter referred to as the duty ratio of the first air blower and the duty ratio of the second air blower that satisfy the second condition, that is, the second condition characterizes that the first air volume and the second air volume are substantially the same), and the duty ratio of the first air blower and the duty ratio of the second air blower that satisfy the second condition are stored in the energy storage device. In some embodiments, if the specifications and models of the first air blower and the second air blower are the same, the duty ratio of the first air blower and the duty ratio of the second air blower that satisfy the second condition are equal. In some other embodiments, if the specifications and models of the first air blower and the second air blower are different, the duty ratio of the first air blower and the duty ratio of the second air blower that satisfy the second condition are different.

In some embodiments, there are multiple groups of duty ratios of the first air blower and duty ratios of the second air blower that satisfy the second condition. Each group of duty ratios of the first air blower and duty ratios of the second air blower that satisfy the second condition include two duty ratios, which are the duty ratio of the first air blower and the duty ratio of the second air blower. The multiple groups of duty ratios of the first air blower and duty ratios of the second air blower that satisfy the second condition are used to adapt to the duty ratio requirements of the energy storage device under different operating conditions. When the cooling activation condition is triggered, the energy storage device selects the duty ratio of the first air blower and the duty ratio of the second air blower that adapt to the heat dissipation control strategy and satisfy the second condition to drive the first air blower and the second air blower to operate, so as to control the first air volume and the second air volume to be substantially the same. For the definition of the duty ratio, reference is made to the foregoing description.

It is understandable that, when the cooling activation condition is triggered, since it is necessary to satisfy both the two conditions that the first air volume is substantially the same as the total fan air volume and the first air volume is substantially the same as the second air volume, while the duty ratios that satisfy the conditions are being determined, the duty ratio of the first air blower and the duty ratios of the fans that satisfy the first condition are determined first, and then the duty ratio of the second air blower that satisfies the second condition is determined, to complete the control of the duty ratio of the first air blower, the duty ratio of the second air blower, and the duty ratios of the fans. Alternatively, the duty ratio of the first air blower and the duty ratio of the second air blower that satisfy the second condition are determined first, and then the duty ratios of the fans that satisfy the first condition are determined based on the air volumes generated by operation of the fans at different duty ratios, to complete the control of the duty ratio of the first air blower, the duty ratio of the second air blower, and the duty ratios of the fans.

Controlling the air volumes generated by operation of the internal and external air blowers to be substantially the same contributes to thermal balance of the air inside the heat exchange unit and reduce noises generated by operation of the fans.

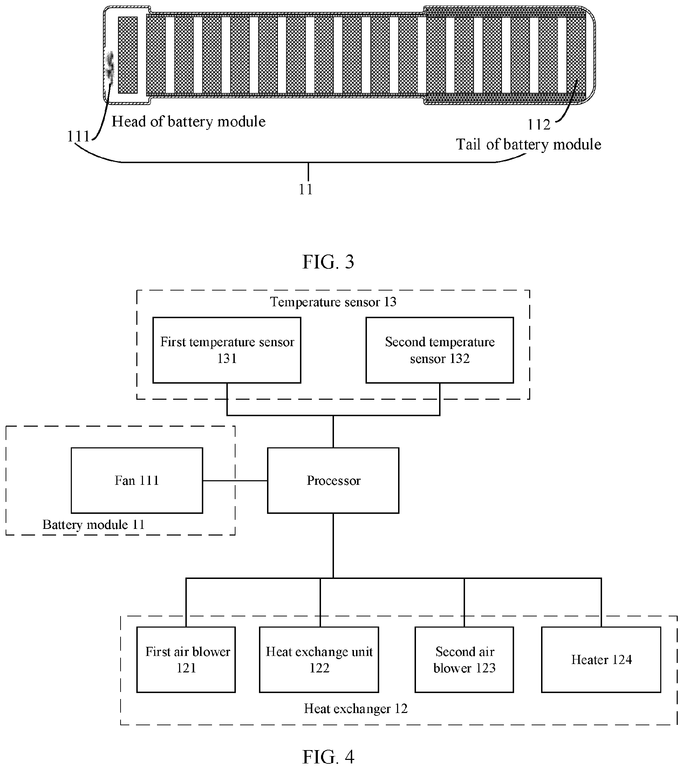

The above is the introduction of the heat dissipation control strategy when the cooling activation condition is triggered. The highest temperature of the cells is greater than or equal to the first temperature threshold, and the difference between the highest temperature of the cells and the ambient temperature outside the energy storage device is greater than the first temperature difference threshold, indicating that the cell temperature is high and cooling and heat dissipation is needed for the cells. The temperature difference between the inside and outside of the energy storage device is large, satisfying the cooling activation condition. Controlling the first air blower, the second air blower, and the fans to operate helps to accelerate heat dissipation of the energy storage device, reduce the cell temperature, and extend the service life of the cells. The air volume generated by operation of the first air blower being substantially the same as the total air volume generated by operation of the fans prevents reduction of heat dissipation efficiency caused by backflow of hot air from the tail of the battery module to the head of the battery module or caused by redundant air volume of the first air blower. It is understandable that, as shown in FIG. 3, the head of the battery module is a part of the battery module where the fans are provided, and the tail of the battery module is: another part disposed opposite the head of the battery module along an arrangement direction of the cells.

II. Temperature equalization control strategy

Referring to FIG. 6, FIG. 6 is a schematic flowchart of a thermal management method for an energy storage device according to some other embodiments of the present application. For the introduction related to the energy storage device, reference is made to the relevant descriptions of the foregoing FIG. 1 to FIG. 4. As shown in FIG. 6, the method includes the following step.

S301: In response to a temperature equalization activation condition being triggered, control a first air blower and a fan of the energy storage device to operate, and control a first air volume to be substantially the same as a total fan air volume.

In some embodiments, the temperature equalization activation condition is set as: a second temperature difference value is greater than or equal to a second temperature difference threshold. The second temperature difference value is defined as a difference between a highest temperature of cells and a lowest temperature of the cells.

For the definition of the highest temperature of the cells, reference is made to the description of the foregoing step S201, and details are not described herein again.

The lowest temperature of the cells refers to a minimum value among temperatures monitored by all first temperature sensors in the energy storage device. The example in which the energy storage device includes 12 battery modules, each battery module includes 24 cells and 12 temperature sensors, and the 12 first temperature sensors are distributed at different positions in the battery module is still used. The 144 cell temperatures form a first cell temperature set $Tc=\{Tc_1, Tc_2, Tc_3, ..., \text{and } Tc_{144}\}$, the lowest temperature of the cells is a minimum value in the first cell temperature set, and a minimum temperature of the cells is $\min\{Tc_1, Tc_2, Tc_3, ..., \text{and } Tc_{144}\}$.

The lowest temperature of the cells is represented as $Tc_{min}$, and $Tc_{min}=\min\{Tc_1, Tc_2, Tc_3, ..., \text{and } Tc_N\}$, where N represents the number of the first temperature sensors in the energy storage device.

The second temperature difference value is represented as $\Delta T2$, and $\Delta T2=Tc_{max}-Tc_{min}$. For the definitions of the first air volume and the total fan air volume, reference is made to the introduction of the foregoing step S201, and details are not described herein again.

The second temperature difference threshold is a threshold used to determine whether the temperature equalization activation condition is satisfied. For example, the second temperature difference threshold is, for example, 5°C. The present application does not impose any specific limitation on the second temperature difference threshold.

In a specific control interaction process, a processor in the energy storage device determines a maximum value and a minimum value of the cell temperature, calculates a difference therebetween as the second temperature difference value, and determines whether the second temperature difference value is greater than or equal to the second temperature difference threshold to determine whether a temperature equalization activation condition is satisfied. If the second temperature difference value is greater than or equal to the second temperature difference value, it indicates that the temperature equalization activation condition is triggered, and the processor of the energy storage device sends start instructions to the first air blower and the fans of each battery module to control the first air blower and the fans of the energy storage device to operate, and outputs corresponding PWM signals to the first air blower and the fans according to the duty ratio of the first air blower and the duty ratios of the fans that satisfy the first condition under the temperature equalization control strategy, so as to control the first air volume to be substantially the same as the total fan air volume. For the introduction of the duty ratio of the first air blower and the duty ratios of the fans that satisfy the first condition, reference is made to the introduction of the foregoing step S201, and details are not described herein again.

In some embodiments, the thermal management method under the temperature equalization control strategy further includes: controlling a second duty ratio to be positively correlated with the second temperature difference value. When the temperature equalization activation condition is triggered, a cycle of an electrical signal for controlling the first air blower is defined as a second cycle, an operation control duration for the first air blower in the second cycle is defined as a second duration, and the second duty ratio is defined as a ratio of the second duration to the second cycle.

In some embodiments of the present application, when the temperature equalization activation condition is triggered, the electrical signal for controlling the first air blower is a second PWM signal, the second cycle represents a cycle of the second PWM signal, the second duty ratio is represented as D2, and D2=(t2/T2)*100%, where t2 represents an operation control duration for the first air blower in the second cycle (that is, a duration within which the second PWM signal is in high level), T2 represents the second cycle, and (T2-t2) represents a stop control duration for the first air blower in the second cycle (that is, a duration within which the second PWM signal is in low level).

The second duty ratio being positively correlated with the second temperature difference value means that a larger second temperature difference value indicates a larger second duty ratio and a higher rotating speed of the first air blower; and a smaller second temperature difference value indicates a smaller second duty ratio and a lower rotating speed of the first air blower.

In some implementations, the second duty ratio and the second temperature difference value have a linear mapping relationship, that is, D2=k2*ΔT2, where k2 represents a linear constant between the second temperature difference value and the second duty ratio, and k2>0. In some other implementations, the second duty ratio being positively correlated with the second temperature difference value is further set as: the second duty ratio and the second temperature difference value have a monotonically increasing relationship, a linear increasing relationship, or a stepwise increasing relationship.

On the premise of controlling the first air volume to be substantially the same as the total fan air volume, the energy storage device controls the second duty ratio to be positively correlated with the second temperature value. In a specific control interaction process, in the process of selecting the duty ratio of the first air blower and the duty ratios of the fan that adapt to the temperature equalization control strategy and satisfy the first condition, the processor of the energy storage device determines a duty ratio range of the first air blower, for example, the duty ratio range of the first air blower is [60%, 90%]. A duty ratio that satisfies the first condition and satisfies a positive correlation relationship with the second temperature difference value is selected in the duty ratio range of the first air blower as a second duty ratio, to control the second duty ratio to be positively correlated with the second temperature difference value.

With reference to some implementations in the foregoing descriptions, under the heat dissipation control strategy, in different temperature ranges, the duty ratio ranges of the first air blower are not the same or not entirely the same. In some other implementations, under the temperature equalization control strategy, in different temperature ranges, the duty ratio range of the first air blower is a fixed range, and the fixed range is the same as one of the duty ratio ranges of the first air blower under the heat dissipation control strategy. For example, under the temperature equalization control strategy, the duty ratio range of the first air blower is fixed as [60%, 90%] or [50%, 90%]. In still some other implementations, under the temperature equalization control strategy, in different temperature ranges, the duty ratio ranges of the first air blower are different ranges, and are correspondingly the same as the duty ratio ranges of the first air blower under the heat dissipation control strategy.

The duty ratio of the internal air blower being positively correlated with the temperature difference value helps to quickly reduce the temperature difference between the cells, thereby shortening the operating time of the internal air blower and the fans, and reducing the energy consumption of the energy storage device.

In some embodiments, the thermal management method in a temperature equalization control mode further includes: controlling a third duty ratio to be positively correlated with a temperature of the battery module. When the temperature equalization activation condition is triggered, a cycle of an electrical signal for controlling the fans is defined as a third cycle, an operation control duration for the fans in the third cycle is defined as a third duration, and the third duty ratio is defined as a ratio of the third duration to the third cycle. The temperature of the battery module is defined as: the highest temperature of the cells in the battery module, or an average temperature of the cells in the cell module.

In some embodiments of the present application, when the temperature equalization activation condition is triggered, the electrical signal for controlling the fans is a third PWM signal, the third cycle represents a cycle of the third PWM signal, the third duty ratio is represented as D3, and D3=(t3/T3)*100%, where t3 represents an operation control duration for the fans in the third cycle (that is, a duration within which the third PWM signal is in high level), T3 represents the third cycle, and (T3-t3) represents a stop control duration for the fans in the third cycle (that is, a duration within which the third PWM signal is in low level).

The temperature of the battery module is represented as Tb, and Tb=max$\{Tc_{b1}, Tc_{b2}, Tc_{b3}, ..., and Tc_{bn}\}$, or $Tb = \frac{\sum_{j=1}^{j=n} Tc_{bj}}{n}$, where n represents the number of the first temperature sensors in one battery module. The example in which 12 first temperature sensors are distributed in one battery module and are located at different positions in the battery module is still used. The processor acquires 12 pieces of data or electrical signals transmitted from the first temperature sensors, obtains 12 cell temperatures through calculation, determines a second cell temperature set $Tc_b$=$\{Tc_{b1}, Tc_{b2}, Tc_{b3}, ..., and Tc_{b12}\}$ including the 12 cell temperatures, and further calculates the temperature of the battery module as max$\{Tc_{b1}, Tc_{b2}, Tc_{b3}, ..., and Tc_{b12}\}$, or $\frac{\sum_{j=1}^{j=12} Tc_{bj}}{12}$.

The third duty ratio being positively correlated with the temperature of the battery module means that a higher temperature of the battery module indicates a larger third duty ratio; and a lower temperature of the battery module indicates a smaller third duty ratio. To be specific, when the temperature equalization condition is triggered, when the temperature of the battery module is higher, a rotating speed of the fans on the battery module is higher; and when the temperature of the battery module is lower, the rotating speed of the fans on the battery module is lower.

In some implementations, the third duty ratio and the temperature of the battery module have a linear mapping relationship, that is, D3= k3*Tb, where k3 represents a linear constant between the temperature of the battery module and the third duty ratio, and k3>0. In some other implementations, the third duty ratio being positively correlated with the temperature of the battery module is further set as: the third duty ratio and the temperature of the battery module have a monotonically increasing relationship, a linear increasing relationship, or a stepwise increasing relationship.

On the premise of controlling the first air volume to be substantially the same as the total fan air volume, the energy storage device controls the third duty ratio to be positively correlated with the temperature of the battery module. In a specific control interaction process, for the fans in each battery module, in the process of selecting the duty ratio of the first air blower and the duty ratios of the fans that adapt to the temperature equalization control strategy and satisfy the first condition, the processor of the energy storage device calculates the temperature of each cell in the battery module, forms a second cell temperature set, determines the temperature of the battery module according to the second cell temperature set, and selects the duty ratios of the fans that satisfy the first condition and satisfy a positive correlation relationship with the temperature of the battery module as a third duty ratio, to control the third duty ratio to be positively correlated with the temperature of the battery module.

The duty ratios of the fans being positively correlated with the temperature of the battery module helps to quickly reduce the temperature difference between the battery modules, thereby shortening the operating time of the fans.

In some specific implementations, the controlling a third duty ratio to be positively correlated with a temperature of the battery module is set as: in response to a temperature of a first battery module being higher than an average temperature of the battery modules, controlling the third duty ratio to increase; and in response to a temperature of a second battery module being lower than the average temperature of the battery modules, controlling the third duty ratio to decrease.

The average temperature of the battery modules is represented as $Tb_a$, and $Tb_a = \frac{\sum_{k=1}^{k=m} Tb_k}{m}$, where $Tb_k$ represents a temperature of the k-th battery module, and m represents a total number of the battery modules.

In a specific control interaction process, the processor of the energy storage device calculates the average temperature of the battery modules according to the temperature of each battery module in the energy storage device. When the temperature of the first battery module is higher than the average temperature of the battery modules, the energy storage device extends the duration for high level of the third PWM signal outputted to the fans of the first battery module to increase the third duty ratio; and when the temperature of the second battery module is lower than the average temperature of the battery modules, the energy storage device shortens the duration for high level of the third PWM signal outputted to the fans of the second battery module to decrease the third duty ratio.

When the temperature of a battery module is higher than the average temperature of the battery modules, by controlling the duty ratios of the fans to increase, the rotating speed of the fans increases, accelerating heat dissipation for a battery module with a higher temperature. When the temperature of a battery module is lower than the average temperature of the battery modules, controlling the duty ratios of the fans to decrease helps to maintain the total fan air volume unchanged.

In some specific implementations, the thermal management method in a temperature equalization control mode further includes: in response to, in the energy storage device, the highest temperature of the cells and the lowest temperature of the cells belonging to the same battery module, controlling the third duty ratio to remain unchanged.

For the definitions of the highest temperature of the cells and the lowest temperature of the cells, reference is made to the descriptions of the foregoing step S201 and the foregoing step S301, and details are not described herein again.

The highest temperature of the cells and the lowest temperature of the cells belonging to the same battery module means that a maximum value and a minimum value in the foregoing first cell temperature set are temperatures monitored by the first temperature sensors in the same battery module.

In a specific control interaction process, after determining the first cell temperature set, the processor of the energy storage device determines whether the maximum temperature in the first cell temperature set and the minimum temperature in the first cell temperature set are temperatures monitored by the first temperature sensors in the same battery module. If the maximum temperature in the first cell temperature set and the minimum temperature in the first cell temperature set are temperatures monitored by the first temperature sensors in the same battery module, after determining the second duty ratio, the energy storage device determines the duty ratios of the fans that, together with the second duty ratio, satisfy the first condition as the third duty ratio, and controls the third duty ratio to remain unchanged.

In some embodiments, the thermal management method further includes: controlling or maintaining the second air blower to be off.

When the temperature equalization activation condition is triggered, controlling or maintaining the second air blower to be off helps to reduce the energy consumption of the energy storage device.

In some embodiments, the thermal management method under the heat dissipation control strategy and temperature equalization control strategy further includes: in response to a cooling activation condition being not triggered and the temperature equalization activation condition being triggered, controlling or maintaining the second air blower to be off.

In some embodiments, the cooling activation condition being not triggered is set as: the highest temperature of the cells is less than the first temperature threshold, or the first temperature value is less than the first temperature difference threshold.

For the definitions of the highest temperature of the cells, the first temperature threshold, the first temperature value, and the first temperature difference threshold, reference is made to the description of the foregoing step S201.

For the definition of the temperature equalization activation condition being triggered, reference is made to the description of the foregoing step S301.

When the cooling activation condition is not triggered but the temperature equalization activation condition is triggered, controlling or maintaining the second air blower to be off helps to reduce the energy consumption.

The above is the introduction of a control strategy (that is, the temperature equalization control strategy) when the temperature equalization activation condition is triggered. The difference between the highest temperature of the cells and the lowest temperature of the cells is greater than the second temperature difference threshold, indicating that the temperature difference between the cells is large. This satisfies the temperature equalization activation condition. Controlling the first air blower and the fans to operate helps to accelerate circulation of the fluid inside the energy storage device, balance the temperatures between the battery modules, reduce the temperature difference between the battery modules, and contributes to the consistency of charging and discharging of the battery modules. Controlling the air volume generated by operation of the first air blower to be substantially the same as the total air volume generated by operation of the fans prevents reduction of heat dissipation efficiency caused by backflow of hot air from the tail of the battery module to the head of the battery module or caused by redundant air volume of the first air blower.

III. Heating control strategy

Referring to FIG. 7, FIG. 7 is a schematic flowchart of a thermal management method for an energy storage device according to still some other embodiments of the present application. For the introduction related to the energy storage device, reference is made to the relevant descriptions of the foregoing FIG. 1 to FIG. 5. As shown in FIG. 7, the method includes the following step.

S401: In response to a heating activation condition being triggered, control a first air blower, a fan, and a heater of the energy storage device to operate, control or maintain a second air blower of the energy storage device to be off, and control a first air volume to be substantially the same as a total fan air volume.

In some embodiments, the heating activation condition is set as: a lowest temperature of the cells is less than a second temperature threshold.

For the definition of the lowest temperature of the cells, reference is made to the introduction of the foregoing step S301, and details are not described herein again.

For the definitions of the first air volume and the total fan air volume, reference is made to the introduction of the foregoing step S201, and details are not described herein again.

The second temperature threshold is a threshold used to determine whether the heating activation condition is satisfied. For example, the second temperature threshold is, for example, 10°C. The present application does not impose any specific limitation on the second temperature threshold.

In a specific control interaction process, after acquiring data or an electrical signal from a first sensor, a processor in the energy storage device obtains a first cell temperature set through calculation, determines a minimum value in the first cell temperature set as the lowest temperature of the cells, and determines whether the lowest temperature of the cells is less than the second temperature threshold, to determine whether the heating activation condition is satisfied. If the lowest temperature of the cells is less than the second temperature threshold, it indicates that the heating activation condition is triggered, and the processor of the energy storage device sends start instructions to the first air blower, the fans, and the heater to control the first air blower, the fans, and the heater of the energy storage device to operate, and outputs corresponding PWM signals to the first air blower and the fans according to a duty ratio of the first air blower and duty ratios of the fans that satisfy a first condition under the heating control strategy, so as to control the first air volume to be substantially the same as the total fan air volume. For the introduction of the duty ratio of the first air blower and the duty ratios of the fans that satisfy the first condition, reference is made to the introduction of the foregoing step S201, and details are not described herein again.

In some embodiments, the thermal management method further includes: controlling a fourth duty ratio to be negatively correlated with the lowest temperature of the cells. When the heating activation condition is triggered, a cycle of an electrical signal for controlling the first air blower is defined as a fourth cycle, an operation control duration for the first air blower in the fourth cycle is defined as a fourth duration, and the fourth duty ratio is defined as a ratio of the fourth duration to the fourth cycle.

In some embodiments of the present application, when the heating activation condition is triggered, the electrical signal for controlling the first air blower is a fourth PWM signal, the fourth cycle represents a cycle of the fourth PWM signal, the fourth duty ratio is represented as D4, and $D4=(t4/T4)*100\%$, where $t4$ represents an operation control duration for the first air blower in the fourth cycle (that is, a duration within which the fourth PWM signal is in high level), $T4$ represents the fourth cycle, and $(T4-t4)$ represents a stop control duration for the first air blower in the fourth cycle (that is, a duration within which the fourth PWM signal is in low level).

The fourth duty ratio being negatively correlated with the lowest temperature of the cells means that a higher lowest temperature of the cells indicates a smaller fourth duty ratio; and a lower lowest temperature of the cells indicates a larger fourth duty ratio. To be specific, when the heating activation condition is satisfied, a lower temperature of the cells indicates a higher rotating speed of the first air blower, and a higher temperature of the cells indicates a lower rotating speed of the first air blower.

In some implementations, the fourth duty ratio and the lowest temperature of the cells have a linear mapping relationship, that is, $D4=k4*Tcmin$, where $k4$ represents a linear constant between the lowest temperature of the cells and the fourth duty ratio, and $k4<0$. In some other implementations, the fourth duty ratio being negatively correlated with the lowest temperature of the cells further includes: the fourth duty ratio and the lowest temperature of the cells have a monotonically decreasing relationship, a linear decreasing relationship, or a stepwise decreasing relationship.

On the premise of controlling the first air volume to be substantially the same as the total fan air volume, the energy storage device controls the fourth duty ratio to be negatively correlated with the lowest temperature of the cells. In a specific control interaction process, in the process of selecting the duty ratio of the first air blower and the duty ratios of the fans that adapt to the heating control strategy and satisfy the first condition, the processor of the energy storage device determines a duty ratio range of the first air blower, for example, the duty ratio range of the first air blower is [50%, 90%]. A duty ratio that satisfies the first condition and satisfies a negative correlation relationship with the lowest temperature of the cells is selected in the duty ratio range of the first air blower as the fourth duty ratio, so as to control the fourth duty ratio to be negatively correlated with the lowest temperature of the cells.

In some implementations of the present application, under the heating control strategy, the duty ratio range of the first air blower is a fixed value, for example, [60%, 90%] or [50%, 90%].

The duty ratio of the internal air blower being negatively correlated with the lowest temperature of the cells helps to quickly increase the temperature of the battery module.

The above is the introduction of a control strategy (that is, the heating control strategy) when the heating activation condition is triggered. The lowest temperature of the cells is less than the second temperature threshold, indicating that the temperature of the cells is low and heating is needed. This satisfies the heating activation condition. The processor controls a heater in a heat exchanger, the internal air blower, and the fans to operate, contributing to quick temperature rise inside the energy storage device.

In some implementations of the present application, the heat dissipation control strategy, temperature equalization control strategy, and heating control strategy are mutually independent control strategies, and the energy storage device executes the heat dissipation control strategy, temperature equalization control strategy, and heating control strategy in parallel.

In the process of executing the heat dissipation control strategy, temperature equalization control strategy, and heating control strategy in parallel, the energy storage device also executes the heat dissipation control strategy, temperature equalization control strategy, and heating control strategy according to the following control principles.

Control principle 1: When there is a conflict between two of the control strategies, the air volumes of the air blowers and fans are controlled according to a principle based on the largest air volume demand.

Based on control principle 1, in some embodiments, the thermal management method under the heat dissipation control strategy and temperature equalization control strategy further includes: in response to both the cooling activation condition and the temperature equalization activation condition being triggered, controlling the first air volume to be a maximum value satisfying the cooling activation condition and the temperature equalization activation condition.

In a specific control interaction process, when both the cooling activation condition and the temperature equalization activation condition are satisfied or triggered, the processor of the energy storage device respectively determines the duty ratio of the first air blower under the heat dissipation control strategy and the duty ratio of the first air blower under the temperature equalization control strategy according to the heat dissipation control strategy and the temperature equalization control strategy described above, and selects the larger one of the two duty ratios of the first air blower as a duty ratio required for controlling the first air blower, so as to control the operation of the first air blower.

When both the cooling activation condition and the temperature equalization activation condition are triggered, controlling the air volume of the internal air blower to be the maximum value satisfying the cooling activation condition and the temperature equalization activation condition contributes to quick heat dissipation and/or temperature equalization, thereby shortening the operating time of the internal air blower and the fans.

In some embodiments, the thermal management method further includes: in response to both the heating activation condition and the temperature equalization activation condition being triggered, controlling the first air volume to be a maximum value satisfying the heating activation condition and the temperature equalization activation condition.

In a specific control interaction process, when both the heating activation condition and the temperature equalization activation condition are triggered or satisfied, the processor of the energy storage device determines the duty ratio of the first air blower under the temperature equalization control strategy and the duty ratio of the first air blower under the heating control strategy according to the temperature equalization control strategy and the heating control strategy described above, and selects the larger one of the two duty ratios of the first air blower as a duty ratio required for controlling the first air blower, so as to control the first air volume to be the maximum value satisfying the heating activation condition and the temperature equalization activation condition.

When both the heating activation condition and the temperature equalization activation condition are triggered, controlling the air volume of the internal air blower to be the maximum value satisfying the heating activation condition and the temperature equalization activation condition contributes to quick temperature rise, thereby shortening the operating time of the air blower and fans.

It is understandable that, under control principle 1, the first air volume and the total fan air volume are kept substantially the same.

Control principle 2: When all conditions for exiting control are satisfied, the air blowers and fans are turned off.

Based on control principle 2, in some embodiments, the thermal management method further includes: in response to a cooling deactivation condition being triggered and a temperature equalization deactivation condition being triggered, or in response to the temperature equalization deactivation condition being triggered and the heating deactivation condition being triggered, controlling the first air blower, the second air blower, and the fans to be off.

In some embodiments, the cooling deactivation condition is set as: the highest temperature of the cells is less than a third temperature threshold, and the third temperature threshold is less than the first temperature threshold, or the first temperature difference value is less than a third temperature difference threshold, and the third temperature difference threshold is less than the first temperature difference threshold. The temperature equalization deactivation condition includes: the second temperature difference value is less than a fourth temperature difference threshold, and the fourth temperature difference threshold is less than the second temperature difference threshold. The heating deactivation condition includes: the lowest temperature of the cells is greater than a fourth temperature threshold, and the fourth temperature threshold is greater than the second temperature threshold.

For the definitions of the highest temperature of the cells, the first temperature threshold, and the first temperature difference threshold, reference is made to the description of the foregoing step S201, and details are not described herein again.

The third temperature threshold and the third temperature difference threshold are thresholds used to determine whether the cooling deactivation condition is satisfied. For example, the third temperature difference threshold is 4°C. The present application does not impose any specific limitation on the third temperature threshold and the third temperature difference threshold.

In a case in which an ambient temperature range is divided into multiple temperature ranges, and different temperature ranges correspond to different first temperature thresholds, different temperature ranges also correspond to different third temperature thresholds. To be specific, when the ambient temperature is within different temperature ranges, the third temperature thresholds are different. In this way, a cell temperature threshold is appropriately set to avoid repeated start and stop of the air blowers and fans due to stop of heat dissipation upon an inappropriate temperature difference between the inside and outside of the energy storage device.

In some implementations, the multiple temperature ranges include a first temperature range, a second temperature range, and a third temperature range. A temperature of the first temperature range is higher than a temperature of the second temperature range, and the temperature of the second temperature range is higher than a temperature of the third temperature range. The third temperature threshold includes a fourth value corresponding to the first temperature range, a fifth value corresponding to the second temperature range, and a sixth value corresponding to the third temperature range. The fourth value is greater than the fifth value, and the sixth value is greater than the fifth value.

Exemplarily, the first temperature range is, for example, $[35°C, +\infty)$, and the fourth value corresponding to the first temperature range is, for example, 38°C; the second temperature range is, for example, $[10°C, 35°C)$, and the fifth value corresponding to the second temperature range is, for example, 30°C; and the third temperature range is, for example, $(-\infty, 10°C)$, and the sixth value corresponding to the third temperature range is, for example, 38°C.

For the definitions of the second temperature difference value and the second temperature difference threshold, reference is made to the description of the foregoing step S301, and details are not described herein again.

The fourth temperature difference threshold is a threshold used to determine whether the temperature equalization deactivation condition is satisfied. For example, the fourth temperature difference threshold is 4°C. The present application does not impose any specific limitation on the fourth temperature difference threshold.

For the definition of the lowest temperature of the cells, reference is made to the introduction of the foregoing step 301; for the definition of the second temperature threshold, reference is made to the introduction of the foregoing step S402; and details are not described herein again.

The fourth temperature threshold is a threshold used to determine whether the heating deactivation condition is satisfied. The fourth temperature threshold is, for example, 15°C. The present application does not impose any specific limitation on the fourth temperature threshold.

In a specific control interaction process, the processor of the energy storage device acquires data or an electrical signal from a temperature sensor, calculates a temperature of the cells and an external ambient temperature, determines a first cell temperature set, determines a maximum value in the first cell temperature set as a highest temperature of the cells, determines a minimum value in the first cell temperature set as a lowest temperature of the cells, calculates a difference between the highest temperature of the cells and the ambient temperature outside the energy storage device as a first temperature difference value, calculates a difference between the maximum value in the first cell temperature set and the minimum value in the first cell temperature set as a second temperature difference value, determines whether the highest temperature of the cells is less than the third temperature threshold, determines whether the first temperature difference value is less than the third temperature difference threshold to determine whether the cooling deactivation condition is satisfied, determines whether the second temperature difference value is less than the fourth temperature difference threshold to determine whether the temperature equalization deactivation condition is satisfied, and determines whether the lowest temperature of the cells is greater than the fourth temperature threshold to determine whether the heating deactivation condition is satisfied. If the highest temperature of the cells is less than the third temperature threshold, or the first temperature difference value is less than the third temperature difference threshold, it indicates that the cooling deactivation condition is satisfied; if the second temperature difference value is less than the fourth temperature difference threshold, it indicates that the temperature equalization deactivation condition is satisfied; and if the lowest temperature of the cells is greater than the fourth temperature threshold, it indicates that the heating deactivation condition is satisfied. When both the cooling deactivation condition and the temperature equalization deactivation condition are satisfied, or both the temperature equalization deactivation condition and the heating deactivation condition are satisfied, the processor of the energy storage device sends stop instructions to the first air blower, the second air blower, and the fans of each battery module, to control the first air blower, the second air blower, and the fan to be off.

When both two deactivation conditions are triggered, controlling the air blowers and fans to be off helps to reduce the energy consumption of the energy storage device.

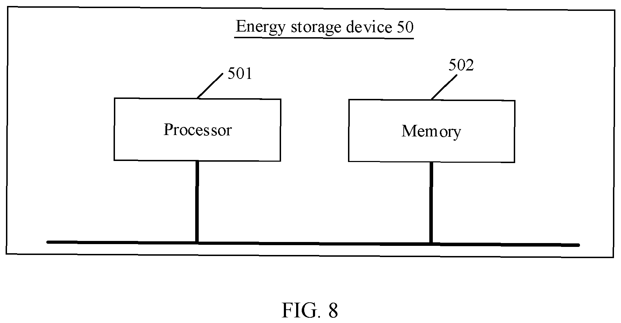

Referring to FIG. 8, FIG. 8 is a schematic structural diagram of an energy storage device according to an embodiment of the present application. The energy storage device 50 includes one or more processors 501 and a memory 502. The memory 502 is connected to one or more processors 501, for example, being connected to the processor 501 via a bus.

The processor 501 is configured to support the energy storage device in performing corresponding functions in the methods in the foregoing method embodiments. The processor 501 may be a central processing unit (central processing unit, CPU), a network processor (network processor NP), a hardware chip, or any combination thereof. The hardware chip may be an application specific integrated circuit (application specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The memory 502 is configured to store program codes and the like. The memory may include a volatile memory (volatile memory, VM), such as a random access memory (random access memory, RAM). The memory 502 may alternatively include a non-volatile memory (non-volatile memory, NVM), such as a read-only memory (read-only memory, ROM), a flash memory (flash memory), a hard disk drive (hard disk drive, HDD), or a solid-state drive (solid-state drive, SSD). The memory may alternatively include a combination of the above types of memories.

The memory 502 may be configured to store non-volatile software programs, non-volatile computer-executable programs, and modules, such as program instructions/modules corresponding to the thermal management method for an energy storage device according to some embodiments of the present application. The processor 501 executes various functional applications and data processing of the thermal management method for an energy storage device by running non-volatile software programs, instructions, and modules stored in the memory, that is, implementing the functions of the thermal management method for an energy storage device provided in the foregoing method embodiments.

The memory 502 may include a program storage area and a data storage area, where the program storage area may store an operating system and application programs required for at least one function. The data storage area may store data created according to the use of the thermal management method for an energy storage device, and the like.

One or more modules are stored in the memory. Upon execution by one or more processors, the thermal management method for an energy storage device in any of the foregoing method embodiments is performed. For example, the method steps described in the foregoing method embodiments are performed, to implement the functions of the modules described in the foregoing apparatus embodiments.

An embodiment of the present application further provides a computer-readable storage medium. The computer-readable storage medium stores a computer program. The computer program includes program instructions, and when the program instructions are executed by a processor, the processor executes the methods in the foregoing embodiments.

Those of ordinary skill in the art can understand that all or some of the processes in the foregoing method embodiments can be implemented by instructing relevant hardware through a computer program, and the program can be stored in a computer-readable storage medium. When being executed, the program may include the processes of the foregoing method embodiments. The storage medium may be a magnetic disk, an optical disk, a read-only memory (Read-Only memory, ROM), a random access memory (Random Access memory, RAM), or the like.

The above disclosures are merely preferred embodiments of the present application and certainly cannot be used to limit the scope of the rights of the present application. Therefore, equivalent changes made according to the claims of the present application still fall within the scope covered by the present application.

**Claims**

1. An energy storage device (10), **characterized in that** the energy device comprises:

    multiple battery modules (11), wherein each of the battery modules (11) comprises a fan (111) and multiple cells (112);
    multiple temperature sensors (13), comprising a first temperature sensor (131) and a second temperature sensor (132), wherein the first temperature sensor (131) is configured to monitor a temperature of the cells (112), and the second temperature sensor (132) is configured to monitor an ambient temperature outside the energy storage device (10); and
    a heat exchanger (12), comprising a first air blower (121), a heat exchange unit (122), and a second air blower (123), wherein the heat exchanger (12) is configured to perform heat exchange between a fluid inside the energy storage device (10) and a fluid outside the energy storage device (10).

2. The energy storage device (10) according to claim 1, **characterized in that** the heat exchanger (12) includes an air supply port (tu1) and an air return port (tu2); the first air blower (121) is configured to drive the fluid inside the energy storage device (10) to flow so that the fluid flows to the battery module (11) through an air supply duct and the fan (111) and the fluid passes through the battery module (11) and exchanges heat with the battery module (11), dissipating heat for the battery module (11) and reducing the temperature of the battery module (11) and after passing through the battery module (11), the fluid enters the heat exchange unit (122) through the air return port tu2 to exchange heat with the fluid outside the energy storage device; the heat exchanger (12) further includes an air inlet (tu3) and an air outlet (tu4); the second air blower (123) is configured to drive the fluid outside the energy storage device (10) to flow into the heat exchanger (12); the second air blower (123) is configured to drive the fluid outside the energy storage device to enter the heat exchange unit (122) from the air inlet (tu3), exchange heat with the fluid inside the energy storage device (10), and then flow out of the air outlet (tu4), thereby taking away heat inside the energy storage device (10).

3. The energy storage device (10) according to claim 2, **characterized in that** the heat exchanger (12) further includes a heater (124), and the heater (124) is provided inside the energy storage device (10) and is configured to heat the cells (112).

4. A thermal management method, applying to the energy storage device (10) according to any one of claims 1 to 3, **characterized in that** the thermal management method comprises:

   in response to a cooling activation condition being triggered, controlling the first air blower (121), the second air blower (123), and the fans (111) to operate, and controlling a first air volume to be substantially the same as a total fan air volume; wherein
   the cooling activation condition comprises: a highest temperature of the cells (112) is greater than or equal to a first temperature threshold, and a first temperature difference value is greater than or equal to a first temperature difference threshold;
   the first temperature difference value is defined as a difference between the highest temperature of the cells (112) and the ambient temperature; and
   the first air volume is defined as an air volume generated by operation of the first air blower (121), and the total fan air volume is defined as a sum of all air volumes generated by operation of the fans (111).

5. The thermal management method according to claim 4, **characterized in that** the thermal management method further comprises:

   setting different temperature ranges corresponding to the ambient temperature, controlling duty ratio range of a first duty ratio to be positively correlated with at least some of the temperature ranges; or/and
   controlling a first duty ratio to be positively correlated with the highest temperature of the cells (112); or/and
   controlling the first air volume and a second air volume to be substantially the same; wherein the first duty ratio is configured to adjust the rotational speed of the first fan (121), the second air volume is defined as an air volume generated by operation of the second air blower (123).

6. The thermal management method according to claim 4 or 5, **characterized in that** the thermal management method further comprises:

   in response to a temperature equalization activation condition being triggered, controlling the first air blower (121) and the fans (111) to operate, and controlling the first air volume to be substantially the same as the total fan air volume; wherein
   the temperature equalization activation condition comprises: a second temperature difference value is greater than or equal to a second temperature difference threshold; and
   the second temperature difference value is defined as a difference between the highest temperature of the cells (112) and a lowest temperature of the cells (112).

7. The thermal management method according to claim 6, **characterized in that** the thermal management method further comprises:

   controlling a second duty ratio to be positively correlated with the second temperature difference value; and/or
   controlling a third duty ratio to be positively correlated with a temperature of the battery module (11); wherein
   the second duty ratio is configured to adjust the rotational speed of the first fan (121), the third duty ratio is configured to adjust the rotational speed of the fans (111), the temperature of the battery module (11) is defined as: (i) the highest temperature of the cells (112) in the battery module (11), or (ii) an average temperature of the cells (112) in the cell module (11).

8. The thermal management method according to claim 7, **characterized in that** the thermal management method further comprises:
   the highest temperature of the cells (112) and the lowest temperature of the cells (112) belonging to the same battery module (11), controlling the third duty ratio to remain unchanged.

9. The thermal management method according to any one of claims 6 to 8, **characterized in that** the thermal management method further comprises:

in response to both the cooling activation condition and the temperature equalization activation condition being triggered, controlling the first air volume to be a maximum value satisfying the cooling activation condition and the temperature equalization activation condition; and/or

in response to the cooling activation condition being not triggered and the temperature equalization activation condition being triggered, controlling or maintaining the second air blower (123) to be off.

10. The thermal management method according to any one of claims 6 to 9, **characterized in that** the heat exchanger (12) further comprises a heater (124), and the thermal management method further comprises:

in response to a heating activation condition being triggered, controlling the first air blower (121), the fans (111), and the heater (124) to operate, controlling or maintaining the second air blower (123) to be off, and controlling the first air volume to be substantially the same as the total fan air volume; wherein the heating activation condition comprises: a lowest temperature of the cells (112) is less than a second temperature threshold.

11. The thermal management method according to claim 10, **characterized in that** the thermal management method further comprises: controlling a fourth duty ratio to be negatively correlated with the lowest temperature of the cells (112); wherein the fourth duty ratio is configured to adjust the rotational speed of the first fan (121).

12. The thermal management method according to claim 10 or 11, **characterized in that** the thermal management method further comprises: in response to both the heating activation condition and the temperature equalization activation condition being triggered, controlling the first air volume to be a maximum value satisfying the heating activation condition and the temperature equalization activation condition.

13. The thermal management method according to any one of claims 10 to 12, **characterized in that** the thermal management method further comprises:

in response to both the cooling deactivation condition and the temperature equalization deactivation condition being triggered, or in response to both the temperature equalization deactivation condition and the heating deactivation condition being triggered, controlling the first air blower (121), the second air blower (123), and the fans (111) to be off; wherein the cooling deactivation condition comprises:

(i) the highest temperature of the cells (112) is less than a third temperature threshold, and the third temperature threshold is less than the first temperature threshold; or
(ii) the first temperature difference value is less than a third temperature difference threshold, and the third temperature difference threshold is less than the first temperature difference threshold;

the temperature equalization deactivation condition comprises: a second temperature difference value is less than a fourth temperature difference threshold, and the fourth temperature difference threshold is less than a second temperature difference threshold; and
the heating deactivation condition comprises: a lowest temperature of the cells (112) is greater than a fourth temperature threshold, and the fourth temperature threshold is greater than a second temperature threshold.

14. A thermal management method, applying to the energy storage device (10) according to any one of claims 1 to 3, wherein the thermal management method comprises:

in response to a temperature equalization activation condition being triggered, controlling the first air blower (121) and the fans (111) to operate, and controlling a first air volume to be substantially the same as a total fan air volume; wherein
the temperature equalization activation condition comprises: a second temperature difference value is greater than or equal to a second temperature difference threshold;
the second temperature difference value is defined as a difference between a highest temperature of the cells (112) and a lowest temperature of the cells (112); and
the first air volume is defined as an air volume generated by operation of the first air blower (121), and the total fan air volume is defined as a sum of all air volumes generated by operation of the fans (111).

15. The thermal management method according to claim 14, **characterized in that** the thermal management method further comprises: controlling or maintaining the second air blower (123) to be off.

FIG. 1

FIG. 2

Head of battery module

Tail of battery module

111

112

11

FIG. 3

Temperature sensor 13

First temperature sensor 131

Second temperature sensor 132

Fan 111

Processor

Battery module 11

First air blower 121

Heat exchange unit 122

Second air blower 123

Heater 124

Heat exchanger 12

FIG. 4

S201

In response to a cooling activation condition being triggered, control a first air blower, a second air blower, and a fan of an energy storage device to operate, and control a first air volume to be substantially the same as a total fan air volume

FIG. 5

S301

In response to a temperature equalization activation condition being triggered, control a first air blower and a fan of an energy storage device to operate, and control a first air volume to be substantially the same as a total fan air volume

FIG. 6

S401

In response to a heating activation condition being triggered, control a first air blower, a fan, and a heater of an energy storage device to operate, control or maintain a second air blower of the energy storage device to be off, and control a first air volume to be substantially the same as a total fan air volume

FIG. 7

Energy storage device 50

501

502

Processor

Memory

FIG. 8